# EUROPÄISCHE PATENTSCHRIFT

(11) **EP 4 412 769 B1**
(45) Veröffentlichungstag und Bekanntmachung des Hinweises auf die Patenterteilung: **03.12.2025**
(21) Anmeldenummer: 22793587.1
(22) Anmeldetag: 07.10.2022
(51) Int. Cl.: B03C 1/01, B03C 1/033, B03C 1/28

(54) **VORRICHTUNG ZUR MAGNETISCHEN AUFREINIGUNG BIOLOGISCHER PROBEN**
APPARATUS FOR MAGNETIC PURIFICATION OF BIOLOGICAL SAMPLES
DISPOSITIF DE PURIFICATION MAGNETIQUE D'ECHANTILLONS BIOLOGIQUES

(30) Priorität: 08.10.2021 DE 202021105458 U
(43) Veröffentlichungstag der Anmeldung: 14.08.2024
(73) Patentinhaber: SanoLiBio Co., Ltd., 10540 Samut Prakan (TH); Schreier, Stefan, 93194 Walderbach (DE)
(72) Erfinder: LANG, Ulrich, Badung, 80351 (ID); SCHREIER, Stefan, 93194 Walderbach (DE)
(74) Vertreter: Reitstötter Kinzebach
(86) Internationale Anmeldenummer: PCT/EP2022/077963
(87) Internationale Veröffentlichungsnummer: WO 2023/057632

(56) Entgegenhaltungen:
- EP-A1- 0 644 425
- WO-A1-2014/058868
- WO-A1-2016/134683
- US-A1- 2011 031 168
- US-A1- 2011 198 293
- US-A1- 2021 008 543
- MAGTIVIO: "MM-Separator M12 + 12, MD90001/MDMG0001 MM-Separator M96, MD90002/MDMG0002/MD90003/MDMG0003 Product Description MM-Separator M12 + 12 (P)", 1 January 2020 (2020-01-01), XP093014430, Retrieved from the Internet <URL:https://www.magtivio.com/wp-content/uploads/2020/02/PS0016-002_MM-separators_manual_use-1.pdf> [retrieved on 20230116]

## Beschreibung

### Technisches Gebiet

Die vorliegende Erfindung betrifft eine Vorrichtung zur magnetischen Aufbereitung, insbesondere zur magnetischen Aufreinigung, biologischer Proben, wobei die Aufbereitung auf spezifischen Wechselwirkungen von nichtmagnetischem biologischem Material mit magnetischen Partikeln beruht.

### Technischer Hintergrund

Im Bereich der biologisch-medizinischen Forschung ist eine Aufreinigung von biologischem Material aus einer heterogenen Partikelsuspension für verschiedene Analysemethoden erforderlich. Dabei besteht ein großes Interesse an der Anreicherung von Zellen und einzelnen zellulären Organismen einschließlich Bakterien und Viren, aber auch von Zellfragmenten wie Proteinen, Peptiden oder Nukleinsäuren.

Der Einfachheit halber wird der Begriff "Zellen" hier im weitesten Sinne verwendet und steht für alle mehrzelligen und einzelligen Organismen, aber auch für Zellfragmente und Viren sowie für einzelne Biomoleküle wie Proteine, Peptide oder Nukleinsäuren.

Zur verbesserten Trennung oder zur Herstellung der Trennbarkeit von schwer oder nur unzureichend trennbaren biologischen Materialien steht eine Vielzahl von Markierungsmethoden zur Verfügung, die häufig auf so genannten Affinitätsreaktionen beruhen. Die gängigste Separationstechnologie basiert auf der Markierung von Zielzellen oder Zellfragmenten mit Fluoreszenzfarbstoffen oder synthetischen magnetischen Partikeln. Diese magnetische Zellseparationstechnologie zeichnet sich im Vergleich zur fluoreszenzaktivierten Zellsortierung durch ihre Einfachheit und geringen Kosten aus.

Die magnetische Separation erfolgt durch Markierung von Zielmaterialien mit rezeptor- bzw. ligandenkonjugierten magnetischen Partikeln. Der Begriff Zielmaterial bezeichnet alle Substanzen und molekularen Strukturen, die sich mit dem biologischen Material verbinden können, um ein spezifisches Bindungspaar zu bilden.

Der Begriff spezifisches Bindungspaar steht für ein Paar oder eine Kombination von Substanzen, die eine Bindungstendenz aufweisen, und umfasst Elemente wie zelluläre Komponenten, biospezifische Liganden und Rezeptoren. In diesem Sinne erfolgt die Markierung eines Zielmaterials durch die Assoziation spezifischer Bindungspaare, bestehend aus Ligand und Rezeptor. Der Begriff "Ligand" bezeichnet die an das Zielmaterial gebundene Komponente, die zu einer spezifischen Bindung fähig ist und Antigene oder Haptene umfasst, die durch mindestens ein Epitop oder andere charakteristische Determinanten definiert sind. Der Begriff "Rezeptor" bezeichnet das Markierungsziel oder eine Gruppe davon mit biospezifischer Affinität zu einem exklusiven Liganden. Mögliche Rezeptoren können monoklonale Antikörper oder Fragmente davon, spezifische Bindungsproteine wie Protein A oder G, das Biotin-Streptavidin-Bindungspaar, Aptamere, Nukleinsäuren usw. sein. Vorzugsweise ist die bio-spezifische Bindung nicht-kovalent, was eine hohe Bindungskinetik und möglicherweise Reversibilität voraussetzt.

Zur Beschreibung des Stands der Technik zur Herstellung von magnetischen Partikeln, die für die magnetische Zellseparationstechnologie geeignet sind, sei auf die Patente US4,884,088, US4,654,267, US4,452,773 und US5,597,531 verwiesen. Danach besteht der Partikelkern aus magnetischen Materialien, wie Magnetit, einem ferromagnetischen Eisenoxid. Eine Kristallkorngröße von mindestens 30 nm ist für die Erzeugung des so genannten paramagnetischen Verhaltens erforderlich. Solche magnetischen Materialien werden oft als magnetisch empfindlich, magnetisierbar oder superparamagnetisch bezeichnet, da sie nur unter dem Einfluss eines äußeren Magnetfeldes eine hohe magnetische Polarisation aufweisen. Diese magnetische Eigenschaft verhindert die Aggregation der Partikel während und nach dem magnetischen Abscheideprozess aufgrund eines unbedeutenden Restmagnetismus. Darüber hinaus bestimmt die Zusammensetzung der magnetischen Partikel zum Teil die so genannte Anreicherungseffizienz. Die magnetischen Partikel besitzen eine maximale magnetische Suszeptibilität, die von der Menge und Größe der ferromagnetischen Kristalle im Kern des Partikels bestimmt wird.

Generell lässt sich die magnetische Trenntechnik in intrinsische und externe Verfahren unterteilen. Wie bereits erwähnt, erzeugen magnetische Partikel, die kleiner als 100 nm sind, in Gegenwart einer externen Magnetfeldquelle nur sehr geringe magnetische Momente. Die geringe Partikelgröße ist jedoch mit einem günstigen Verhältnis zwischen reaktiver Oberfläche und Partikelvolumen bzw. der Partikelmenge verbunden. Folglich sind für die magnetische Fraktionierung unter Verwendung von so genannten Nanopartikeln mit Durchmessern zwischen 30 nm und 100 nm sogenannte Hochgradienten-Magnetseparationssysteme erforderlich, die beispielsweise in den Patenten US 4,664,796, US 5,200,084, WO 96/26782A und EP 0 942 766 A beschrieben sind.

Kommerziell verfügbare intrinsische Zellseparationssysteme für die allgemeine Zellseparation unter Verwendung von magnetischen Nanopartikeln mit einem Durchmesser von 50 nm wurden von der Firma Miltenyi AG entwickelt. Dabei wird eine so genannte magnetische Trennsäule verwendet, die aus einer ferromagnetischen Matrix in einem nicht-magnetischen Behälter besteht. Zum Zweck der magnetischen Trennung wird die Trennsäule in ein starkes äußeres Magnetfeld gebracht. In der Trennkammer sind hohe Magnetfeldgradienten von bis zu 100 Tesla/cm zu erwarten. Das Verfahren ist im Vergleich zu externen magnetischen Trennverfahren kompliziert, verhindert schnelle Protokolle, erschwert die Automatisierung und erhöht die Kosten. Darüber hinaus erzeugt die magnetische Trennmatrix eine große reaktive Oberfläche, die Stress auf lebensfähige Zellen ausüben oder die unspezifische Bindung von Zellen an die reaktive Oberfläche erhöhen kann.

Um die Nachteile von Magnetseparationssäulen zu vermeiden und die Vorteile der Verwendung von Nanopartikeln zu nutzen, wurden externe Hochgradienten-Magnetseparationssysteme entwickelt. Dabei wurde der Schwerpunkt auf externe spezialisierte Magnetkonfigurationen gelegt, wie zum Beispiel die Quadrupol- oder Hexapolkonfiguration, wie sie zum Beispiel im Patent US 5,186,827 beschrieben ist. Solche Magnete erzeugen Feldgradienten im Bereich von 1,5 Tesla/cm, erfordern aber größere Magnetpartikel mit einer Größe (Durchmesser) im Bereich von 150 nm bis 4 µm.

Die Verwendung von Magnetpartikeln mit einem Durchmesser von mehr als 500 nm ermöglicht den Einsatz einer sehr einfachen und weniger kostspieligen Magnetseparation, bei der ein Inkubationsbehälter neben einem einfachen Permanentmagneten aufgestellt wird. Kommerziell erhältliche Systeme werden zum Beispiel von Dynal Inc. unter der Bezeichnung Dynal MPC1 angeboten.

Ein ähnliches System wird in der US-Patentanmeldung US 2010/0264090 A1 beschrieben. Die dort beschriebene Vorrichtung zielt auf eine möglichst effektive Abscheidung von bereits magnetisierten Partikeln in einem Medium ab. Die magnetische Abscheidevorrichtung umfasst wenigstens einen Permanentmagneten und eine Aufnahmevorrichtung für Probengefäße, die insbesondere so ausgelegt ist, dass sich die Probengefäße für eine effektive Abscheidung am Ort des größten Magnetfeldgradienten befinden. Insbesondere bei größeren Probengefäßen variiert aber die Stärke des Magnetfeldgradienten über der Höhe des Probengefäßes. Daher ist bei bestimmten Ausführungsformen der in US 2010/0264090 A1 beschriebenen Vorrichtung vorgesehen, dass die Probengefäße in zwei unterschiedlichen Positionen angeordnet werden können, so dass entweder das Hauptvolumen des Probengefäßes oder die Spitze des Probengefäßes im stärksten Magnetfeldgradienten ausgesetzt wird (vgl. beispielsweise Absatz [0185] in dieser Publikation). Wie insbesondere aus dem Absätzen [0199] und ff. von US 2010/0264090 A1 hervorgeht, beschäftigt sich diese Publikation ausschließlich mit dem magnetischen Abtrennen bereits magnetisierbarer Partikel. Die eigentliche Inkubation von biologischem Material mit Magnetpartikeln findet außerhalb der dort beschriebenen Vorrichtung statt. Dazu ist bei bestimmten Ausführungsformen sogar vorgesehen, dass der Probenhalter lösbar von der Magnetfeldeinheit ausgebildet ist (vgl. beispielsweise die Absätze [0199] ff.).

Ein wichtiger Aspekt bei der Weiterentwicklung von auf Magnetpartikeln basierenden Separationssystemen liegt aber in der Verbesserung der Anreicherungsqualität, was im Wesentlichen bedeutet, dass der Verlust der gewünschten Zellen verringert und ihre Reinheit maximiert wird. Der Anreicherungsprozess besteht in der Regel aus einer Inkubationsphase zur magnetischen Markierung des Zielmaterials und der anschließenden magnetischen Trennung. Üblicherweise wird die Inkubation in Ruhe durchgeführt, wenn Partikel verwendet werden, die nicht größer als 150 nm sind, oder gelegentliches Mischen, wenn größere Partikel mit Sedimentationstendenz verwendet werden.

Das Patent DE 10 2015 013 851 beschreibt ein magnetisches Markierungsverfahren, bei dem Partikel mit biologischem Material in Gegenwart eines Magnetfeldes und unter Rotation des Inkubationsbehälters inkubiert werden. Es wurde gezeigt, dass das Verfahren eine höhere Effizienz der magnetischen Markierung ergibt und im Vergleich zur Inkubation in Ruhe eine höhere Menge an zielgebundenen magnetischen Partikeln innerhalb kürzerer Zeitintervalle ergibt. Der Begriff "dynamic magnetic labelling" wurde später von Schreier et al. 2017 eingeführt, um eine aktive Form der magnetischen Markierung im Vergleich zur eher passiven Inkubation in Ruhe zu beschreiben: Es wurde vermutet, dass die Rotation des Inkubationsbehälters in Anwesenheit des Magnetfeldes die Kollision der Partikel mit dem Zielmaterial erzwingt und verstärkt und damit die Reaktionskinetik beschleunigt. Der Begriff "Kollisionsverhalten" bezeichnet Bewegungsformen, die für die Erzeugung aller Arten von Bindungen zwischen einem Reaktionspaar gleicher oder unterschiedlicher Art verantwortlich sind. Im Allgemeinen kann das Kollisionsverhalten durch das lineare Moment eines magnetischen Teilchens, die Häufigkeit oder Menge der Kollisionen pro Zeitintervall zwischen zwei gleichen oder zwei unterschiedlichen Reaktionspaaren, die Summe der Kollisionen über eine bestimmte Inkubationsdauer eines Reaktanten mit anderen unterschiedlichen Reaktanten und die Dauer des Kontakts zwischen einem Reaktionspaar charakterisiert werden.

Magnetische Partikel lassen sich in Abhängigkeit ihrer Größe grob in Nano- und Mikropartikel eingruppieren. Magnetische Nanopartikel (30 nm bis 150 nm) werden auf Grund ihrer Eigenschaften auch als Ferrofluide bezeichnet. Derartige Partikelsuspensionen bilden stabile Kolloide aus, unterliegen der Brownschen Molekularbewegung und sedimentieren auch über längere Zeiträume (Monate bis Jahre) nicht. Nanopartikel sind daher sehr beweglich in Lösung und bilden hohe reaktive Oberflächen aus, versprechen demnach im Vergleich zu Mikropartikeln (> 0.2 um) effizientere magnetische Markierung und Abscheidung und schnellere Reaktionskinetiken, wie zum Beispiel erwähnt in dem Patent US5541072. Der Bedarf für effizientere Systeme und damit die Verwendung von Partikeln in Nanogröße wird besonders deutlich in der magnetischen Abscheidung von seltenen Zellen (1 Zelle pro mL), wie zum Beispiel Tumorzellen oder Stammzellen in der peripheren Blutzirkulation. Des Weiteren erfordert die Verwendung von Mikropartikeln zur magnetischen Markierung oftmals die nachträgliche Abtrennung der Partikel von den Zielzellen, da größere Partikel zur Verklumpung mit der Zielsubstanz neigen und somit nachfolgende Untersuchungen, wie zum Beispiel Fluoreszenzmikroskopie oder Durchflusszytometrie behindern können. Bisherige Methoden zur nachträglichen Abtrennung von Markierungsmaterial und Neuerungen wurden in dem Patent US20150204857 ausführlich beschrieben. Der bisher beschriebene Stand der Technik liefert keinen Betrag zur Verbesserung der Anreicherungsqualität.

In der internationalen Patentanmeldung WO 2020/161252 A1 der Anmelderin wird eine optimierte und hochautomatisierte Vorrichtung zur magnetischen Aufreinigung biologischer Proben beschrieben, bei der durch einen beweglichen und drehbaren Probenhalter die relative Lage eines Probengefäßes bezüglich eines Permanentmagneten, sowie die Rotationsgeschwindigkeit des Probengefäßes im Laufe aufeinanderfolgender Prozessschritte verändert werden kann, um so die Stärke des auf die Probe wirkenden Magnetfeldes, insbesondere die Stärke des Magnetfeldgradienten, sowie die Durchmischung der Probe, bei den Prozessschritten der Probenzugabe, der Probeninkubation, Waschung und anschließender Trennung zu variieren. Eine derartige Vorrichtung ist recht teuer, so dass letztlich nur hochspezialisierte Labore entsprechende Investitionen tätigen können. Ferner ist die Bedienung und Programmierung einer derartigen automatisierten Vorrichtung aufwändig, so dass sie sich nur bedingt für die Entwicklung neuer Protokolle oder Assays zur magnetischen Aufbereitung biologischer Proben eignet.

Der vorliegenden Erfindung liegt das technische Problem zugrunde, die in WO 2020/161252 A1 beschriebenen Überlegungen zur effizienten magnetischen Aufbereitung biologischer Proben sowohl hinsichtlich der spezifischen Inkubation mit magnetischen oder magnetisierbaren Partikeln als auch hinsichtlich der Separation, kostengünstiger zu realisieren, also eine kostengünstigere Vorrichtung zur magnetischen Aufreinigung biologischer Proben bereitzustellen, welche zumindest einen Teil der Vorteile der in WO 2020/161252 A1 beschriebenen Vorrichtung realisiert. Dabei soll die magnetische Aufbereitung auch mit kleineren Magnetpartikeln ermöglicht werden als sie bei den einfachen Zellseparatoren des Standes der Technik zum Einsatz kommen. Ferner soll die erfindungsgemäße Vorrichtung eine einfache und schnelle Handhabung ermöglichen, so dass sie auch bei der Entwicklung neuer Protokolle oder Assays zum Einsatz kommen kann.

Darüber hinaus offenbart die US 2021/008543 A1 die Merkmale des Oberbegriffs des unabhängigen Anspruchs, während die WO 2014/058868 A1 und die EP 0 644 425 A1 Halter für Laborgeräte offenbaren, wobei die Halter mehrere Positionen umfassen, die mit unterschiedlichen Magnetfeldstärken ausgestattet sind, sodass beim Platzieren des Laborgeräts an den verschiedenen Positionen unterschiedliche Effekte hinsichtlich der magnetischen Partikeln und des Materials im Inneren des Laborgeräts auftreten.

### Lösung des technischen Problems

Gelöst wird dieses technische Problem durch die Vorrichtung zur magnetischen Aufbereitung, insbesondere zur magnetischen Aufreinigung, biologischer Proben mit den Merkmalen des vorliegenden Anspruchs 1. Vorteilhafte Weiterbildungen der vorliegenden Erfindung sind Gegenstand der abhängigen Ansprüche.

Der vorliegenden Erfindung liegt die Beobachtung zugrunde, dass bereits eine sehr gute Spezifizität der Bindung magnetischer Partikel an gewünschte Zellen erzielt werden kann, wenn zumindest die Stärke des Magnetfeldgradienten in einzelnen Prozessschritten variiert wird, während die durch Mischung statt durch eine variable Rotation auch durch kurze Mischvorgänge, beispielsweise mit Hilfe eines Vortex-Mischers, außerhalb des Magnetfeldes realisiert werden kann.

Die vorliegende Erfindung betrifft demnach eine Vorrichtung zur magnetischen Aufbereitung, insbesondere zur magnetischen Aufreinigung, biologischer Proben mit wenigstens einer Einrichtung zur Erzeugung eines statischen Magnetfeldgradienten, wenigstens einer Halterung für Probengefäße, die wenigstens zwei Probengefäßaufnahmen umfasst, wobei die Probengefäßaufnahmen bezüglich der Einrichtung zur Erzeugung eines statischen Magnetfeldgradienten in einer unterschiedlichen relativen Lage angeordnet sind. Unter einer unterschiedlichen relativen Lage ist im vorliegenden Zusammenhang zu verstehen, dass sich das durch die Einrichtung zur Erzeugung eines statischen Magnetfeldgradienten erzeugte Magnetfeld im Bereich der wenigstens zwei Probegefäßaufnahme in wenigstens einem Parameter unterscheidet. Sollte beispielsweise die Vorrichtung und insbesondere die Einrichtung zur Erzeugung eines statischen Magnetfeldgradienten gewisse Symmetrien aufweisen, so wäre eine bezüglich dieser Symmetrien symmetrische Anordnung der beiden Probengefäßaufnahmen keine "unterschiedliche relative Lage" im Sinne der vorliegenden Erfindung. Je nach Art der verwendeten Einrichtung zur Erzeugung eines statischen Magnetfeldgradienten und der Größe der verwendeten Probengefäße kann sich auch, insbesondere über die Höhe der Probengefäße, eine gewisse Änderung von Parametern des Magnetfeldes ergeben. Die wenigstens zwei erfindungsgemäß vorgesehenen Probegefäßaufnahmen sollen sich dabei bezüglich der Einrichtung zur Erzeugung eines statischen Magnetfeldgradienten an derart unterschiedlichen Orten befinden, dass auf ein in die erste Probegefäßaufnahme eingesetztes Probengefäß an keiner Stelle der darin befindlichen Probe ein Magnetfeld wirkt, das mit dem Magnetfeld übereinstimmt, das auf eine Probe wirkt, die sich in einem, in die zweite Probegefäßaufnahme eingesetzten Probengefäß befindet. Insbesondere sind die beiden erfindungsgemäß vorgesehenen Probegefäßaufnahmen nicht so konfiguriert, dass derselbe, möglichst maximale Magnetfeldgradient, an unterschiedlichen Stellen des Probengefäßes wirkt, wie dies beispielsweise in US 2010/0264090 A1 vorgeschlagen wird.

Vorzugsweise sind die wenigstens zwei Probengefäßaufnahmen bezüglich der Einrichtung zur Erzeugung eines statischen Magnetfeldgradienten so angeordnet, dass sich am Ort der in die Probengefäßaufnahmen eingesetzten Probengefäße das Magnetfeld in Betrag und/oder Gradient unterscheidet. Somit können Probengefäße in unterschiedlichen Prozessschritten einem Magnetfeld ausgesetzt werden, das stärker oder schwächer und/oder einen größeren oder einen kleineren Magnetfeldgradienten aufweist.

Dazu ist es vorteilhaft, wenn die Probengefäße zwischen den Probengefäßaufnahmen gewechselt werden können, d. h. die Probengefäßaufnahmen der Vorrichtung sind vorzugsweise so ausgebildet, dass sie dieselben Probengefäße aufnehmen können.

Zur Erzeugung des Magnetfeldgradienten können unterschiedliche physikalische Techniken verwendet werden. Beispielsweise kann die Einrichtung zur Erzeugung eines Magnetfeldgradienten wenigstens einen Elektromagneten umfassen. In diesem Fall umfasst die Vorrichtung vorzugsweise auch eine Stromversorgung für den Elektromagneten, beispielsweise eine eingebaute Batterie oder einen Akkumulator oder auch einen elektrischen Netzanschluss.

Die Einrichtung zur Erzeugung eines Magnetfeldgradienten umfasst wenigstens einen Permanentmagneten, da die erfindungsgemäße Vorrichtung in diesem Fall keinerlei Energieversorgung benötigt und besonders kostengünstig ausgeführt werden kann.

Der Permanentmagnet ist als, im Wesentlichen stabförmiger Dipolmagnet mit Luftspalt ausgebildet. Bei einer solchen Anordnung entsteht in der Umgebung des Luftspaltes ein besonders starker Magnetfeldgradient.

Die wenigstens zwei Probengefäßaufnahmen sind so angeordnet, dass sich eine erste Probengefäßaufnahme nahe an dem Luftspalt des Dipolmagneten befindet, also an einem Ort mit einem hohen Magnetfeldgradienten. Die zweite Probengefäßaufnahme ist an einer Seitenfläche des Dipolmagneten angeordnet, beispielsweise in der Mitte eines Vollmagnetabschnitts des Dipolmagneten.

Am Ort der zweiten Probengefäßaufnahme läge dann beispielsweise ein geringerer Magnetfeldgradient, aber, je nach Abstand von der Seitenfläche, gegebenenfalls ein höheres absolutes Magnetfeld als am Ort der ersten Probengefäßaufnahme vor. Eine der Probegefäßaufnahmen gewährleistet, dass sich die dort eingesetzten Probengefäße an einem Ort mit maximalem Magnetfeldgradienten befinden. Diese Probengefäßaufnahme wird insbesondere zur Separation von bereits mit magnetischen Partikeln beladenem biologischen Material eingesetzt. Die zweiten, und gegebenenfalls weitere, Probengefäßaufnahmen befinden sich vorzugsweise an Orten mit niedrigerem Magnetfeld bzw. niedrigerem Magnetfeldgradienten und können dementsprechend für Prozessschritte, wie die Zugabe von magnetischen Partikeln zur Probe und insbesondere zur Inkubation der Probe mit den zugegebenen magnetischen Partikeln, herangezogen werden, um eine möglichst selektive Bindung der magnetischen Partikel an das Zielmaterial zu ermöglichen. Gemäß einer Ausführungsform ist die zweite Probengefäßaufnahme so angeordnet, dass der Magnetfeldgradient verglichen mit der ersten Position geringer ist und beispielsweise über das Probengefäß ein relativ homogenes Magnetfeld ausgebildet wird, so dass eine kontrollierte Kinetik der magnetischen Partikel im Probengefäß erzeugt werden kann, was die spezifische Bindung unterstützt. Bei der Zugabe von magnetischen Partikeln zur Probe wird das Magnetfeld insbesondere so gewählt, dass zwar eine Fraktionierung der Partikel auftritt, aber die Partikel beim anschließenden Mischungsschritt, der außerhalb Vorrichtung stattfindet, wieder einfach resuspendiert werden können, um für die anschließende Inkubation ein möglichst homogenes Gemisch von Probe und magnetischen Partikeln zu erzielen.

Vorzugsweise ist wenigstens eine dritte Probengefäßaufnahme vorgesehen, die in einem größeren Abstand von dem Dipolmagneten als die erste und zweite Probengefäßaufnahme angeordnet ist. Am Ort der dritten Probengefäßaufnahme liegt dann sowohl ein geringeres Magnetfeld als auch ein geringerer Magnetfeldgradient vor. Die dritte Probengefäßaufnahme kann insbesondere zur Inkubation eingesetzt werden.

Es versteht sich, dass weitere Probengefäßaufnahmen in der erfindungsgemäßen Vorrichtung vorgesehen sein können. Sind mehr als drei Probengefäßaufnahmen vorhanden, kann man insbesondere den Inkubationsschritt modifizieren. Abhängig von der Lage der Probengefäßaufnahmen, der verwendeten magnetischen oder magnetisierbaren Partikel, des gewünschten oder nicht gewünschten Zielmaterials, der Viskosität der Lösung und anderer Parameter, können beispielsweise die kontrollierte Kollision der magnetischen Partikel mit dem gewünschten Zielmaterial (bei einer positiven Selektion) oder dem nicht gewünschten Zielmaterial (bei einer negativen Selektion) kontrolliert und modifiziert werden. Dadurch kann man beispielsweise die spezifische Bindung im Hinblick auf die Geschwindigkeit der Partikel, sowie der angreifenden Momente, denen die magnetischen Partikel auf einer Oberfläche des biologischen Materials, wie beispielsweise einer Zellmembran, ausgesetzt sind, optimieren. Alternativ kann man mit weiteren Probengefäßaufnahmen die Anreicherungseffizienz entweder zu Gunsten der sogenannten Abscheidungseffizienz oder zu Gunsten der Reinheit des Zielmaterials in Abhängigkeit der Selektionsart (positiv oder negativ) optimieren.

Konstruktiv kann die erfindungsgemäße Vorrichtung in unterschiedlicher Weise realisiert werden. In einer Ausführungsform umfasst die erfindungsgemäße Vorrichtung ein Gehäuse, das die Einrichtung zur Erzeugung eines Magnetfeldgradienten umschließt. Das Gehäuse besteht vorzugsweise aus nichtmagnetischem Material, beispielsweise aus Aluminium oder einem Kunststoffmaterial. Die Oberseite des Gehäuses bildet dann die Halterung für Probengefäße und die Probengefäßaufnahmen können dabei als Öffnungen auf der Oberseite ausgebildet sein. Die Oberseite des Gehäuses kann auch als Gehäusedeckel ausgebildet sein, welcher mit einer Gehäusebasis fest verbunden, beispielsweise verklebt, verschraubt, verklipst oder verschweißt werden kann. Der Gehäusedeckel kann auch abnehmbar ausgebildet sein, so dass bei Bedarf ein einfacher Zugang zu der Einrichtung zur Erzeugung eines Magnetfeldgradienten besteht.

Die Öffnungen auf der Oberseite des Gehäuses sind vorzugsweise zur Aufnahme von Reaktionsgefäßen ausgebildet, die typischerweise Fluide in der Größenordnung von Mikro- bis Millilitern aufnehmen können. Auch die Reaktionsgefäße bestehen typischerweise aus nichtmagnetischen Materialien, beispielsweise aus Kunststoffmaterialien, die gegenüber den eingesetzten Fluiden inert sind.

Die Oberseite des Gehäuses kann geeignete Beschriftungen an den Öffnungen aufweisen, so dass der Nutzer eine einfache Zuordnung der jeweiligen Öffnung zu entsprechenden vorgegebenen Protokollschritten einer Aufreinigungsprozedur vornehmen kann.

In einer Ausführungsform der Erfindung ist zumindest eine der Öffnungen zur Aufnahme der Probengefäße mit einer abgeschrägten Innenfläche versehen, deren Kontur an den Außenumfang des Probengefäßes angepasst ist. Bei einer im Wesentlichen ebenen Oberseite der erfindungsgemäßen Vorrichtung weist eine typische Öffnung vertikale Innenflächen auf, d. h. die Innenfläche bildet mit der Oberseite im Wesentlichen einen rechten Winkel, so dass die Probengefäße ebenfalls vertikal in die Vorrichtung eingesetzt werden. Unter einer abgeschrägten Innenfläche ist demgegenüber eine Innenfläche der Öffnung zu verstehen, die mit der Oberseite des Gehäusedeckels einen von 90 Grad abweichenden Winkel bildet, so dass das Probengefäß entsprechend schräg in die Öffnung eingesetzt wird. Typische Probengefäße, die mit der erfindungsgemäßen Vorrichtung verwendet werden, weisen einen zylindrischen Hals (üblicherweise mit verschließbarem Deckel) und eine konische Spitze auf. Das Probenfluid befindet sich typischerweise im konischen, unteren Bereich des Probengefäßes. Durch ein schräges Einsetzen der Probengefäße, das durch die abgeschrägte Innenfläche der Öffnung der Probenaufnahme gewährleistet wird, kann die Spitze des Probengefäßes optimaler im Bereich des maximalen Magnetfeldgradienten positioniert werden als dies bei einer vertikalen Orientierung des Probengefäßes möglich wäre. Vorzugsweise ist die Abschrägung der Innenfläche der Öffnung hinsichtlich des Winkels zur Oberseite der Vorrichtung an den entsprechenden Konuswinkel der üblicherweise eingesetzten Probengefäße angepasst, so dass die zum Spalt des Dipolmagneten gerichtete Fläche des Konus des Probengefäßes im Wesentlichen vertikal orientiert ist. Dadurch befindet sich zumindest ein Großteil des Probenfluides im Bereich eines homogenen Magnetfeldgradienten, und insbesondere, wenn es sich bei der Probenaufnahme um die unmittelbar am Spalt des Dipolmagneten angeordnete Probenaufnahme handelt, im Bereich des maximalen Magnetfeldgradienten.

Die wenigstens eine Halterung der erfindungsgemäßen Vorrichtung kann außerdem Behälteraufnahmen für Reaktionsfluidbehälter umfassen. Diese sind vorzugsweise an Orten der Vorrichtung ausgebildet, an denen nur noch eine geringe Magnetfeldstärke herrscht. Beispielsweise können die Behälteraufnahmen für Reaktionsfluidbehälter als Öffnungen ausgebildet sein, die am Außenumfang der Oberseite des Gehäuses der Vorrichtung ausgespart sind.

Die erfindungsgemäße Vorrichtung betrifft außerdem ein Set zur magnetischen Aufreinigung biologischer Proben umfassend eine Vorrichtung zur magnetischen Aufreinigung biologischer Proben der oben beschriebenen Art, sowie magnetische oder magnetisierbare Partikel, insbesondere magnetische oder magnetisierbare Microbeads, sowie ein auf ein spezifisches Aufreinigungsproblem ausgerichtetes Protokoll zur magnetischen Aufreinigung biologischer Proben. Die magnetischen oder magnetisierbaren Partikel/Microbeads haben typischerweise einen Durchmesser im Bereich von 100 bis 500 nm.

### Detaillierte Beschreibung eines Ausführungsbeispiels

Die Erfindung wird im Folgenden unter Bezugnahme auf ein in den vorliegenden Zeichnungen dargestelltes Ausführungsbeispiel näher erläutert.

In den Figuren zeigen:
- Fig. 1: eine perspektivische Ansicht einer erfindungsgemäßen Vorrichtung zur magnetischen Aufreinigung biologischer Proben;
- Fig. 2: die Ansicht der Fig. 1, wobei zusätzlich verdeckte Linien dargestellt sind;
- Fig. 3: eine Draufsicht auf die Vorrichtung der Fig. 1; und
- Fig. 4: die Ansicht der Fig. 3, wobei zusätzliche verdeckte Linien dargestellt sind.

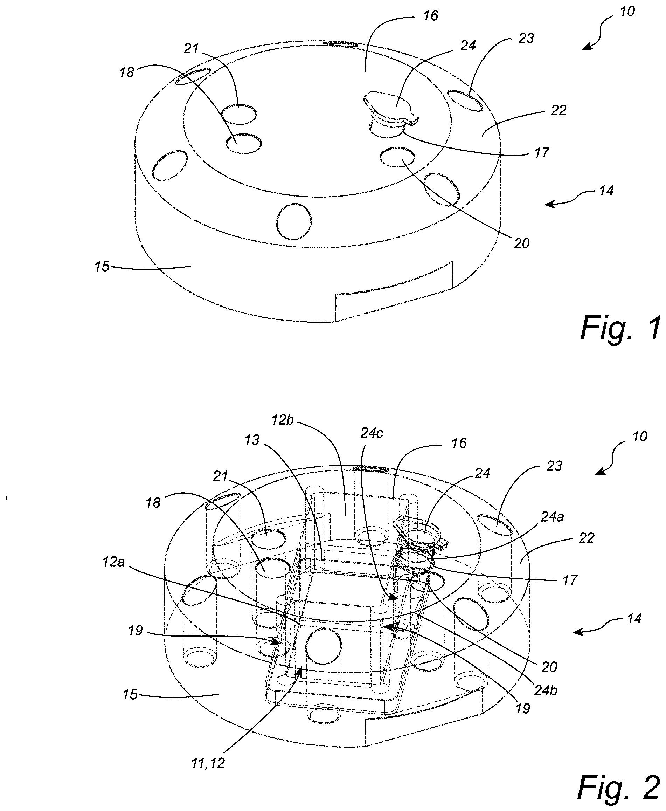

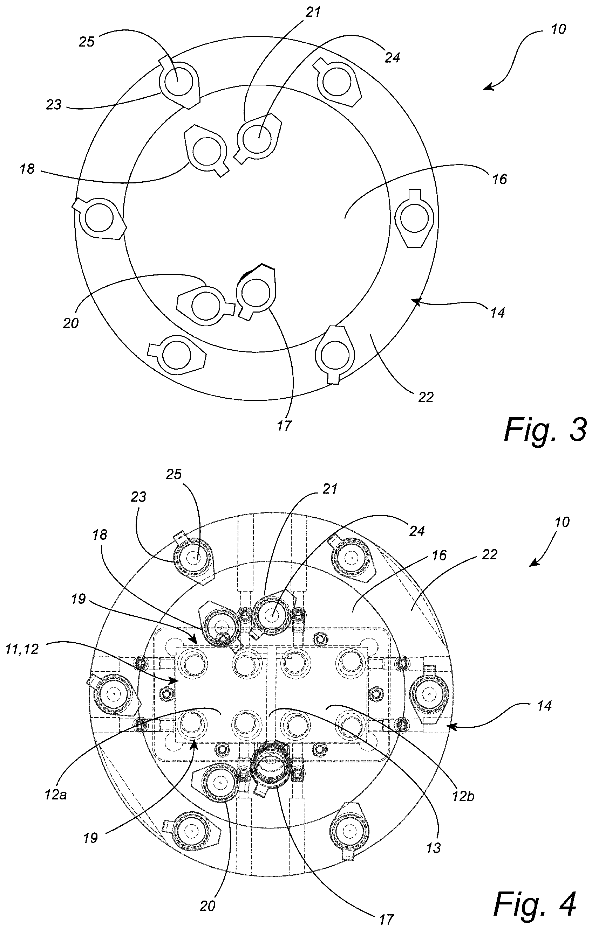

In den Figuren 1-4 wird die erfindungsgemäße Vorrichtung zur magnetischen Aufbereitung, insbesondere Aufreinigung, biologischer Proben insgesamt mit der Bezugsziffer 10 bezeichnet. Die Vorrichtung 10 umfasst eine Einrichtung zur Erzeugung eines statischen Magnetfeldgradienten 11, die im vorliegenden Beispiel als Permanentmagnet, insbesondere als im Wesentlichen stabförmiger Dipolmagnet 12 ausgebildet ist. Der Dipolmagnet 12 weist zwei Vollmagnetabschnitte 12a, 12b auf, die durch einen Luftspalt 13 getrennt. Im Außenbereich des Luftspaltes 13 treten die höchsten Magnetfeldgradient auf. Der stabförmige Dipolmagnet 12 ist in einem Gehäuse 14 angeordnet, das eine Gehäusebasis 15 und einen Gehäusedeckel mit einer Gehäuseoberseite 16 aufweist. Auf der Gehäuseoberseite 16 sind im dargestellten Beispiel vier Probengefäßaufnahmen ausgespart, die als Öffnungen auf der Oberseite des Gehäuses ausgebildet sind. Wie man insbesondere der Draufsicht der Figuren 3 und 4 entnimmt, befindet sich eine erste Probengefäßaufnahme 17 unmittelbar am Außenbereich des Spaltes 13 des Dipolmagneten 12. Eine zweite Probengefäßaufnahme 18 befindet sich auf Höhe einer Seitenwand 19 eines der Vollmagnetabschnitte 12a des Dipolmagneten 12, also in einem Bereich, in welchem ein geringerer Magnetfeldgradient herrscht. Das Magnetfeld selbst ist am Ort der zweiten Probengefäßaufnahme 18 aber vergleichsweise hoch. Eine dritte Probengefäßaufnahme 20 ist ebenfalls an einer Seitenwand 19 des Vollmagnetabschnittes 12a, aber in einem größeren Abstand als die zweite Probengefäßaufnahme 18 angeordnet, so dass am Ort der dritten Probengefäßaufnahme 20 ein geringeres Magnetfeld herrscht. Im dargestellten Beispiel ist außerdem eine vierte Probengefäßaufnahme 21 dargestellt, die sich ebenfalls im Bereich des Spaltes 13 des Dipolmagneten 12 befindet, jedoch in einem größeren Abstand vom Spalt als die erste Probengefäßaufnahme 17, so dass am Ort der vierten Probengefäßaufnahme 21 sowohl ein geringerer Magnetfeldgradient als auch ein geringeres absolutes Magnetfeld verglichen mit dem Ort der ersten Probengefäßaufnahme herrscht. Am Außenumfang 22 des Gehäuses 14 sind weitere Öffnungen 23 zur Aufnahme von Reaktionsfluidbehältern vorgesehen.

In den Darstellungen der Figuren 1 und 2 ist der besseren Übersichtlichkeit halber nur ein einzelnes Probengefäß 24 dargestellt, dass in eine der Probengefäßaufnahmen eingesetzt ist, während in den Figuren 3 und 4 vier Probengefäße 24 und sechs Reaktionsfluidbehälter 25 dargestellt sind, die in die entsprechenden Gefäßaufnahmen/Öffnungen eingesetzt sind. Wie man insbesondere der Figur 2 entnimmt, weist das in die erste Probenaufnahme 17 eingesetzte Probengefäß 24 einen zylindrischen Hals 24a und eine konisch zulaufende, unten abgerundete Spitze 24b auf. Die Öffnung der ersten Probeaufnahme 17 weist eine abgeschrägte Innenfläche auf, so dass das Probengefäß 24 schräg in die erste Probenaufnahme 17 eingesetzt ist und sich der mit Probenfluid gefüllte konische Bereich 24b des Probengefäßes möglichst nahe am Luftspalt 13 des Dipolmagneten 12 befindet. Wenn, wie dargestellt, die abgeschrägte Innenfläche hinsichtlich ihres Abschrägungswinkels an den Konuswinkel des Probengefäßes angepasst ist, erfolgt das Einsetzen des Probengefäßes in einer solchen Weise, dass eine zum Luftspalt 13 orientierte Wand 24c des konischen Abschnitts 24b im Wesentlichen vertikal orientiert ist, so dass sich über diesen Abschnitt des Probengefäßes ein im Wesentlichen homogener Magnetfeldgradient ausbildet.

### Beispiele:

Die Verwendung der in den Figuren 1 bis 4 beschriebenen erfindungsgemäßen Vorrichtung wird im Folgenden anhand eines vereinfachten Protokolls für Rückgewinnung von Zielblutzellen unter Verwendung reaktiver magnetischer Anti-CD45-Partikel bzw. Anti-CD34-Partikel erläutert. In zahlreichen Assay-Protokollen, bei denen die erfindungsgemäße Vorrichtung zum Einsatz kommt, wird typischerweise das Probengefäß bei Waschschritten und zur abschließenden Separation der mit magnetischen oder magnetisierbaren Partikeln verbundenen Zellfraktion in die erste Probengefäßaufnahme 17 eingesetzt (maximaler Magnetfeldgradient). Die Zugabe der magnetischen oder magnetisierbaren Partikel (Microbeads) erfolgt typischerweise, wenn das Probengefäß in die vierte Probengefäßaufnahme 21 eingesetzt ist. Für Inkubationsschritte wird das Probengefäß typischerweise in die zweite Probenaufnahme 18 eingesetzt.

In den folgenden Beispielen wird im Beispiel 1 eine bereits vorgereinigte Zellfraktion zwecks positiver Selektion von seltenen hematopoietischen Stammzellen aufbereitet. Im Beispiel 2 wird mit Vollblut zwecks negativer Selektion von sehr seltenen nicht-hematopoietischen Zellen gearbeitet und erfordert zwei Durchgänge der magnetischen Aufbereitung mit einer dazwischengeschalteten Lyse der roten Blutkörperchen.

### Beispiel 1:

Materialien:
- Inkubationspufferlösung: iso-osmolare phosphatgepufferte Lösung, ergänzt mit 3% fötalem Rinderserum;
- Waschlösung: iso-osmolare phosphatgepufferte Lösung;
- Erythrozyten-Lysepuffer: 154 mM NH4Cl, 10 mM NaHCO3, 2 mM EDTA;
- Magnetvorrichtung: Aluminium-eingehauster Neodym-Magnet Typ 2: 0,52 Tesla, zwei gepaarte quadratische Dipolmagnete in einer Anordnung von 30mmx30mmx30mm pro Einheit;
- Mikrozentrifuge 1.5ml Plastikbehälter für die Inkubation;
- 1-ml-Plastikspritze;
- Anti-CD34 Kit bestehend aus superparamagnetische Partikel (Mikrobeads), reaktiv gegen Biotin und Anti-CD34-Antikoerper konjugiert mit Biotin (SanoLibio GmbH, München, Deutschland);
- Vollblut von gesunden erwachsenen Spendern, das höchstens 24 Stunden lang in Natriumheparin-Blutkonserven gelagert wurde.

### Verfahren:

Vor der Anreicherung der Leukozyten aus Vollblut wurden die Erythrozyten, wie dem Fachmann bekannt, mit geeigneten Lysepuffern (RBC-Lysepuffer) lysiert und die gereinigten Leukozyten durch Zentrifugation konzentriert. Die gereinigten Leukozyten wurden dann mit dem Inkubationspuffer für 5 Minuten bei Raumtemperatur inkubiert.

Die weiteren Prozessschritte wurden manuell oder nach dem neuen Verfahren und unter Verwendung der erfindungsgemäßen Vorrichtung durchgeführt. In allen Proben wurden anti-CD34-reaktive Antikörper mit 3x10⁷ aufbereiteten Leukozyten gemischt.

| | |
|---|---|
| Schritt 1: | Einstellung einer vorgegebenen Zellsuspensionskonzentration und Befüllen eines Probengefäßes 24, |
| Schritt 2: | Einsetzen des Probengefäßes 24 in die vierte Probengefäßaufnahme 21, Zugabe von magnetischen Microbeads, |
| Schritt 3 | kurze Vortex-Mischung des Probengefäßes 24 außerhalb der Vorrichtung, |
| Schritt 4: | Wiedereinsetzen des Probengefäßes 24 in die zweite Probengefäßaufnahme 18 und magnetische Inkubation bei geschlossenem Probengefäß, gegebenenfalls zwischenzeitliches Vortex-Mischen außerhalb der Vorrichtung, |
| Schritt 5: | Einsetzten des Probengefäßes 24 in die erste Probengefäßaufnahme 17, Waschen der Teilchenfraktion durch Entfernen des Überstandes und Zugabe einer Waschlösung (z.B. PBS) zur magnetischen Fraktion im magnetischen Feld; |
| Schritt 6: | Magnetische Trennung während das Probengefäß in der ersten Probengefäßaufnahme 17 verbleibt. Die gewünschten Zellen befinden sich in der magnetischen Fraktion. |

### Beispiel 2:

Die Verwendung der erfindungsgemäßen Vorrichtung wird im Folgenden anhand eines vereinfachten Protokolls für die Aufreinigung von nicht-hematopoetischen Zielblutzellen mittels negativer Selektion direkt aus einer Vollblutprobe unter Verwendung reaktiver magnetischer anti-CD45-Partikel und prozesslich integrierter Lyse der roten Blutzellen erläutert.

Materialien:
wie beschrieben in Beispiel 1, allerdings unter Verwendung superparamagnetische Partikel, die gegen CD45 reaktiv sind, konjugiert mit Anti-CD45 Antikörpern (SanoLibio GmbH, München, Deutschland).

Verfahren:
Maximal 1mL Vollblut wird zur manuellen Abreicherung der Leukozyten bzw. Anreicherung seltener Zellen aus anti-koagulierten frischen Vollblut mit den Mikrobeads dem neuen Verfahren folgend und unter Verwendung der erfindungsgemäßen Vorrichtung direkt inkubiert und die darin enthaltenen magnetisierten Zellen anschließend separiert. Im Anschluss daran, werden die Erythrozyten, wie dem Fachmann bekannt mit geeigneten Lysepuffern (RBC-Lysepuffer) lysiert und die gereinigte Zellsuspension durch Zentrifugation konzentriert. Zum Erreichen einer annehmbaren Anreicherungseffizienz erfolgt ein zweiter Depletionsschritt.

| | |
|---|---|
| Schritt 1: | Einstellen des mit Vollblut beladenen Probengefäßes 24 in die vierte Probengefäßaufnahme 21, Zugabe von magnetischen Microbeads; |
| Schritt 2: | kurze Vortex-Mischung des Probengefäßes 24 außerhalb der Vorrichtung |
| Schritt 3: | Wiedereinsetzen des Probengefäßes 24 in die zweite Probengefäßaufnahme 18 und magnetische Inkubation bei geschlossenem Probengefäß, gegebenenfalls zwischenzeitliches Vortex-Mischen außerhalb der Vorrichtung; |
| Schritt 4: | Einsetzten des Probengefäßes 24 in die erste Probengefäßaufnahme 17, Waschen der Teilchenfraktion durch Entfernen bzw. Sammeln des Überstandes und Zugabe eines Waschpuffers (z.B. PBS) im magnetischen Feld (Überstände in einem separaten Behälter zusammenführen); |
| Schritt 5: | Magnetische Trennung der gesammelten Überstände, während das neue Probengefäß in der ersten Probengefäßaufnahme 17 wieder eingeführt wird; |
| Schritt 6: | Sammeln des Überstandes (Schritt 5) und Überführung zur Lyse der Erythrozyten in entsprechenden Lysepuffer; |
| Schritt 7: | Einstellung einer vorgegebenen Zellsuspensionskonzentration durch Zentrifugation und Durchführung einer zweiten Aufreinigung analog Beispiel 1 |
| (Schritt 1-4) und folgend der Schritte 4 und 5 in diesem Beispiel. Allerdings befinden sich die gewünschten Zellen im Beispiel 2 in der nicht-magnetischen Fraktion. | |

### Bezugszeichenliste

- 10: Vorrichtung zur magnetischen Aufbereitung biologischer Proben
- 11: Einrichtung zur Erzeugung eines statischen Magnetfeldgradienten
- 12: Dipolmagnet
- 12a: Vollmagnetabschnitt des Dipolmagneten
- 12b: Vollmagnetabschnitt des Dipolmagneten
- 13: Luftspalt des Dipolmagneten
- 14: Gehäuse
- 15: Gehäusebasis
- 16: Halterung, Gehäuseoberseite, Gehäusedeckel
- 17: erste Probengefäßaufnahme, erste Öffnung
- 18: zweite Probengefäßaufnahme, zweite Öffnung
- 19: Seitenwand des Dipolmagneten
- 20: dritte Probengefäßaufnahme, dritte Öffnung
- 21: vierte Probengefäßaufnahme, vierte Öffnung
- 22: Außenumfang des Gehäuses
- 23: Aufnahmen/Öffnungen für Reaktionsfluidbehältern
- 24: Probengefäß
- 24a: zylindrischer Hals des Probengefäßes
- 24b: konische Spitze des Probengefäßes
- 24c: spaltnahe Wand der konischen Spitze des Probengefäßes
- 25: Reaktionsfluidbehälter

## Patentansprüche

1. Vorrichtung zur magnetischen Aufbereitung biologischer Proben (10), mit
wenigstens einer Einrichtung zur Erzeugung eines statischen Magnetfeldgradienten (11), welche wenigstens einen Permanentmagneten umfasst,
wenigstens einer Halterung (15) für Probengefäße (24), die wenigstens zwei Probengefäßaufnahmen (17,18,20,21) umfasst, wobei die Probengefäßaufnahmen (17,18,20,21) bezüglich der Einrichtung zur Erzeugung eines statischen Magnetfeldgradienten (11) in einer unterschiedlichen relativen Lage angeordnet sind,
**dadurch gekennzeichnet, dass** der Permanentmagnet ausgebildet ist als stabförmiger Dipolmagnet (12) mit Luftspalt (13) und die wenigstens zwei Probengefäßaufnahmen (17,18,20,21) so angeordnet sind, dass sich eine erste Probengefäßaufnahme (17) nahe am Luftspalt (13) des Dipolmagneten befindet und dass sich eine zweite Probengefäßaufnahme (18) nahe an einer Seitenwand (19) des Dipolmagneten (12) befindet.

2. Vorrichtung gemäß Anspruch 1, **dadurch gekennzeichnet, dass** die wenigstens zwei Probengefäßaufnahmen (17,18,20,21) bezüglich der Einrichtung zur Erzeugung eines statischen Magnetfeldgradienten (11) so angeordnet sind, dass sich am Ort der in die Probengefäßaufnahmen (17,18,20,21) eingesetzten Probengefäße (24) das Magnetfeld in Betrag und/oder Gradient unterscheidet.

3. Vorrichtung gemäß einem der Ansprüche 1 oder 2, **dadurch gekennzeichnet, dass** die wenigstens zwei Probengefäßaufnahmen (17,18,20,21) dieselben Probengefäße (24) aufnehmen können.

4. Vorrichtung gemäß einem der Ansprüche 1 bis 3, **dadurch gekennzeichnet, dass** wenigstens eine dritte Probengefäßaufnahme (20) vorgesehen ist, die in größerem Abstand von dem Dipolmagneten als die erste und zweite Probenaufnahme (17,18) angeordnet ist.

5. Vorrichtung gemäß einem der Ansprüche 1 bis 4, **dadurch gekennzeichnet, dass** die Vorrichtung ein Gehäuse (14) umfasst, das die Einrichtung zur Erzeugung eines Magnetfeldgradienten (11) umschließt, wobei die Oberseite (16) des Gehäuses die Halterung für Probengefäße (24) bildet und die Probengefäßaufnahmen als Öffnungen (17,18,20,21) in der Gehäuseoberseite (16) ausgebildet sind.

6. Vorrichtung gemäß Anspruch 5, **dadurch gekennzeichnet, dass** zumindest eine der Öffnungen (17) zur Aufnahme der Probengefäße (24) abgeschrägte Innenflächen aufweist.

7. Vorrichtung gemäß Anspruch 6, **dadurch gekennzeichnet, dass** Probengefäße (24) mit zylindrischem Hals (24a) und konischer Spitze (24b) verwendet werden.

8. Vorrichtung gemäß einem der Ansprüche 1 bis 7, **dadurch gekennzeichnet, dass** die wenigstens eine Halterung außerdem Behälteraufnahmen (23) für Reaktionsfluidbehälter (25) umfasst.

9. Set zur magnetischen Aufreinigung biologischer Proben, umfassend:
eine Vorrichtung zur magnetischen Aufreinigung biologischer Proben gemäß einem der Ansprüche 1 - 8;
magnetische oder magnetisierbare Partikel, insbesondere Microbeads; und
ein Protokoll zur magnetischen Aufreinigung biologischer Proben.

## Claims

1. Apparatus for magnetic processing of biological samples (10), having
at least one device for generating a static magnetic field gradient (11), said device comprising at least one permanent magnet,
at least one holder (15) for sample vessels (24), which comprises at least two sample vessel receptacles (17, 18, 20, 21), wherein the sample vessel receptacles (17, 18, 20, 21) are arranged in a different relative position with respect to the device for generating a static magnetic field gradient (11),
**characterized in that** the permanent magnet is designed as a rod-shaped dipole magnet (12) with an air gap (13) and the at least two sample vessel receptacles (17, 18, 20, 21) being arranged such that a first sample vessel receptacle (17) is located close to the air gap (13) of the dipole magnet, and a second sample vessel receptacle (18) is located close to a side wall (19) of the dipole magnet (12).

2. Apparatus according to claim 1, **characterised in that** the at least two sample vessel receptacles (17, 18, 20, 21) are arranged with respect to the device for generating a static magnetic field gradient (11) in such a way that the magnetic field differs in magnitude and/or gradient at the location of the sample vessels (24) inserted into the sample vessel receptacles (17, 18, 20, 21).

3. Apparatus according to any one of claims 1 or 2, **characterised in that** the at least two sample vessel receptacles (17, 18, 20, 21) can receive the same sample vessels (24).

4. Apparatus according to any one of claims 1 to 3, **characterised in that** at least one third sample vessel receptacle (20) is provided, which is arranged at a greater distance from the dipole magnet than the first and second sample receptacles (17, 18).

5. Apparatus according to any one of claims 1 to 4, **characterised in that** the apparatus comprises a housing (14) enclosing the device for generating a magnetic field gradient (11), the top (16) of the housing forming the holder for sample vessels (24) and the sample vessel receptacles being designed as openings (17, 18, 20, 21) in the housing top (16).

6. Apparatus according to claim 5, **characterised in that** at least one of the openings (17) for receiving the sample vessels (24) has bevelled inner faces.

7. Apparatus according to claim 6, **characterised in that** sample vessels (24) with a cylindrical neck (24a) and a conical tip (24b) are used.

8. Apparatus according to any one of claims 1 to 7, **characterised in that** the at least one holder additionally comprises container receptacles (23) for reaction fluid containers (25).

9. Set for magnetic purification of biological samples, comprising:
an apparatus for the magnetic purification of biological samples according to any one of claims 1 - 8;
magnetic or magnetisable particles, in particular microbeads; and
a protocol for the magnetic purification of biological samples.

## Revendications

1. Dispositif de traitement magnétique d'échantillons biologiques (10), comprenant
au moins un dispositif de génération d'un gradient de champ magnétique statique (11), qui comprend au moins un aimant permanent,
au moins un support (15) pour récipients d'échantillon (24), qui comprend au moins deux logements pour récipient d'échantillon (17, 18, 20, 21), les logements pour récipient d'échantillon (17, 18, 20, 21) étant agencés dans une position relative différente par rapport au dispositif de génération d'un gradient de champ magnétique statique (11),
**caractérisé en ce que** l'aimant permanent est réalisé sous la forme d'un aimant dipolaire en forme de barre (12) avec entrefer (13), et **en ce que** les logements pour récipient d'échantillon (17, 18, 20, 21), au moins au nombre de deux, sont agencés de façon telle qu'un premier logement pour récipient d'échantillon (17) se trouve à proximité de l'entrefer (13) de l'aimant dipolaire et qu'un deuxième logement pour récipient d'échantillon (18) se trouve à proximité d'une paroi latérale (19) de l'aimant dipolaire (12).

2. Dispositif selon la revendication 1, **caractérisé en ce que** les logements pour récipient d'échantillon (17, 18, 20, 21), au moins au nombre de deux, sont agencés par rapport au dispositif de génération d'un gradient de champ magnétique statique (11) de façon telle que le champ magnétique diffère en quantité et/ou en gradient à l'emplacement des récipients d'échantillon (24) insérés dans les logements pour récipient d'échantillon (17, 18, 20, 21).

3. Dispositif selon l'une des revendications 1 ou 2, **caractérisé en ce que** les logements pour récipient d'échantillon (17, 18, 20, 21), au moins au nombre de deux, peuvent recevoir les mêmes récipients d'échantillon (24).

4. Dispositif selon l'une des revendications 1 à 3, **caractérisé en ce qu'**est prévu au moins un troisième logement pour récipient d'échantillon (20), qui est agencé à une plus grande distance de l'aimant dipolaire que les premier et deuxième logements pour récipient d'échantillon (17, 18).

5. Dispositif selon l'une des revendications 1 à 4, **caractérisé en ce que** le dispositif comprend un boîtier (14) qui entoure le dispositif de génération d'un gradient de champ magnétique (11), la face supérieure (16) du boîtier formant le support destiné aux récipients d'échantillon (24), et les logements pour récipient d'échantillon étant réalisés sous la forme d'orifices (17, 18, 20, 21) dans la face supérieure du boîtier (16).

6. Dispositif selon la revendication 5, **caractérisé en ce qu'**au moins un des orifices (17) de réception des récipients d'échantillon (24) présente des surfaces intérieures biseautées.

7. Dispositif selon la revendication 6, **caractérisé en ce que** l'on utilise des récipients d'échantillon (24) présentant un col cylindrique (24a) et une pointe conique (24b).

8. Dispositif selon l'une des revendications 1 à 7, **caractérisé en ce que** le support, au moins au nombre de un, comprend en outre des logements pour réservoir (23) destinés à des réservoirs de fluide de réaction (25).

9. Kit de purification magnétique d'échantillons biologiques, comprenant :
un dispositif de purification magnétique d'échantillons biologiques selon l'une des revendications 1 à 8 ;
des particules magnétiques ou magnétisables, en particulier des microbilles ; et
un protocole de purification magnétique d'échantillons biologiques.
